# EUROPÄISCHE PATENTANMELDUNG

(11) **EP 4 635 285 A1**
(43) Veröffentlichungstag der Anmeldung: **22.10.2025**
(21) Anmeldenummer: 25165857.1
(22) Anmeldetag: 25.03.2025
(51) Int. Cl.: A01D 34/86, A01D 34/42, A01D 34/56, A01D 34/43, F16C 39/02

(54) **ARBEITSKOPF UND ARBEITSGERÄT, UMFASSEND DEN ARBEITSKOPF**

(30) Priorität: 25.03.2024 DE 102024108448
(71) Anmelder: MULAG FAHRZEUGWERK Heinz Wössner GmbH & CO. KG, 77728 Oppenau (DE)
(72) Erfinder: Wössner, Holger, 77728 Oppenau (DE); Meißner, Uwe, 77728 Oppenau (DE); Sütterlin, Manuel, 77728 Oppenau (DE)
(74) Vertreter: Weickmann & Weickmann PartmbB

(57) **Zusammenfassung**

Arbeitskopf (100), insbesondere Mähkopf, welcher dazu ausgebildet und bestimmt ist, bei einem Arbeitsgerät (200) eingesetzt zu werden, wobei der Arbeitskopf (100) umfasst: eine Arbeitswelle (106), welche um eine Rotationsachse (R) rotierend antreibbar ist, wobei die Arbeitswelle (106) mit wenigstens einer Arbeitseinheit (110) ausgestattet ist, welche dazu eingerichtet ist, zusammen mit der Arbeitswelle (106) um die Rotationsachse (R) zu rotieren, ein Gehäuse (102), welches dazu eingerichtet ist, die Arbeitswelle (102) drehbar darin aufzunehmen, wobei die Arbeitswelle (106) an wenigstens einem der beiden Enden davon über wenigstens ein um die Rotationsachse (R) drehbares Lager (112a, 112b) des Arbeitskopfes (100) in dem Gehäuse (102) gelagert ist, wobei zwischen dem wenigstens einen Lager (112a, 112b) und der Arbeitswelle (106) eine Ausgleichseinheit (120) angeordnet ist.

## Beschreibung

Die Erfindung betrifft einen Arbeitskopf, insbesondere einen Mähkopf, welcher dazu ausgebildet und bestimmt ist, bei einem Arbeitsgerät eingesetzt zu werden, wobei der Arbeitskopf eine Arbeitswelle, welche um eine Rotationsachse rotierend antreibbar ist, wobei die Arbeitswelle mit wenigstens einer Arbeitseinheit ausgestattet ist, welche dazu eingerichtet ist, zusammen mit der Arbeitswelle um die Rotationsachse zu rotieren, und ein Gehäuse umfasst, welches dazu eingerichtet ist, die Arbeitswelle drehbar darin aufzunehmen, wobei die Arbeitswelle an wenigstens einem der beiden Enden davon über wenigstens ein um die Rotationsachse drehbares Lager in dem Gehäuse gelagert ist.

Die Erfindung betrifft ferner ein Arbeitsgerät, insbesondere ein Ausleger-Arbeitsgerät, welches den Arbeitskopf umfasst.

Gattungsgemäße Arbeitsköpfe bzw. Arbeitsgeräte werden beispielsweise zur Durchführung von Mäharbeiten an einem Fahrbahn-Randstreifen oder dergleichen eingesetzt. Dabei kann der Arbeitskopf bzw. das Arbeitsgerät beispielsweise an einem Fahrzeug angeordnet sein, welches während der Durchführung der Mäharbeiten auf der Fahrbahn oder dem Randstreifen fährt.

Während eines Betriebs des Arbeitskopfes kann es durch eine Rotation der Arbeitswelle um die Rotationsachse mit vergleichsweise hoher Drehzahl regelmäßig auch zu einer starken Beanspruchung und damit zu einem hohen Verschleiß des wenigstens einen Lagers kommen. Auch weitere im Betrieb auftretende Lastspitzen und/oder Drehungleichförmigkeiten und/oder Fertigungstoleranzen an sämtlichen Komponenten des Arbeitskopfes können den Lagerverschleiß zusätzlich fördern. Dies kann dazu führen, dass das wenigstens eine Lager nach einem Erreichen einer Verschleißgrenze oder sogar vorsorglich nach Ablauf einer vorbestimmten Anzahl von Betriebsstunden ausgetauscht werden muss. Derartige Wartungsarbeiten können jedoch nicht nur zeitaufwendig und kostenintensiv sein, sondern auch dazu führen, dass der Arbeitskopf bzw. das Arbeitsgerät zunehmenden Anforderungen in Bezug auf Nachhaltigkeit und/oder Ressourcenschonung nicht mehr ausreichend gerecht werden kann.

Es ist daher Aufgabe der vorliegenden Erfindung, hier Abhilfe zu schaffen, insbesondere durch Bereitstellung eines Arbeitskopfes, welcher eine reduzierte Verschleißanfälligkeit aufweist.

Diese Aufgabe wird erfindungsgemäß durch einen Arbeitskopf der eingangs gennannten Art gelöst, bei welchem zwischen dem wenigstens einen Lager und der Arbeitswelle eine Ausgleichseinheit angeordnet ist.

Erfindungsgemäß werden im Betrieb des Arbeitskopfes an der Arbeitswelle auftretende Schwingungen und/oder Lastspitzen und/oder Drehungleichförmigkeiten, welche nicht nur durch den Betrieb selbst, sondern auch durch Fertigungstoleranzen bedingt sein können, durch die Ausgleichseinheit zumindest teilweise ausgeglichen und daher nicht unmittelbar in das wenigstens eine Lager übertragen. Hierdurch kann eine Lebensdauer des Lagers erhöht werden, bestenfalls sogar eine Dauerfestigkeit des wenigstens einen Lagers erreicht werden, so dass ein Austausch des Lagers nur noch in seltenen Fällen oder überhaupt nicht mehr erforderlich ist. Dies erhöht nicht nur die Wartungsfreundlichkeit des erfindungsgemäßen Arbeitskopfes, sondern trägt auch nachhaltigen Aspekten Rechnung, da die Anzahl regelmäßig auszutauschender Verschleißteile reduziert werden und dementsprechend eine erhöhte Ressourcenschonung erreicht werden kann.

Die Anordnung der Ausgleichseinheit zwischen dem wenigstens einen Lager und der Arbeitswelle kann dabei derart verstanden werden, dass ein Kraftfluss ausgehend von der Arbeitswelle zunächst durch die Ausgleichseinheit und dann in das wenigstens eine Lager übergeht und/oder ausgehend von dem wenigstens einen Lager zunächst durch die Ausgleichseinheit und dann in die Arbeitswelle übergeht.

Das wenigstens eine Lager kann beispielsweise als ein Wälzlager, insbesondere ein, vorzugsweise einfaches oder mehrfaches, Rillenkugellager oder ein Zylinderrollenlager oder ein Kegelrollenlager oder dergleichen, ausgebildet sein. Bevorzugt kann die Arbeitswelle an beiden Enden davon über jeweils ein um die Rotationsachse drehbares Lager in dem Gehäuse gelagert sein.

Bevorzugt kann der Arbeitskopf als ein Mähkopf, beispielsweise ein Schlegelmähkopf, zur Durchführung von Mäharbeiten oder dergleichen ausgebildet sein, jedoch ohne hierauf beschränkt zu sein. Ferner kann die Arbeitseinheit an der Arbeitswelle beispielsweise ein Schlagmittel und/oder Messer oder dergleichen sein. Die Arbeitswelle kann mittels einer, beispielsweise elektrischen und/oder hydraulischen, Antriebseinheit antreibbar sein, welche an dem Arbeitskopf oder hiervon beabstandet angeordnet sein kann und welche mittels eines Antriebskraftübertragungsmittels, beispielsweise eines Riementriebes, mit der Arbeitswelle verbunden sein kann.

Gemäß einem bevorzugten Ausführungsbeispiel kann das wenigstens eine Lager lediglich um die Rotationsachse drehbar sein und darüber hinaus keinen weiteren, insbesondere rotatorischen und/oder translatorischen, Freiheitsgrad aufweisen. Aufgrund der Ausgleichseinheit muss nämlich das wenigstens eine Lager selbst nicht mehr zwingend dazu in der Lage sein, die genannten Schwingungen und/oder Lastspitzen und/oder Drehungleichförmigkeiten und/oder Fertigungstoleranzen auszugleichen, so dass grundsätzlich ein konstruktiv einfach ausgestaltetes Lager verwendet werden kann, welches keine über die Drehbarkeit um die Rotationsachse hinausgehenden Freiheitsgrade aufweisen muss, um eine entsprechende Ausgleichswirkung am Lager selbst erzielen zu können.

Gemäß einem weiteren Ausführungsbeispiel kann die Arbeitswelle wenigstens teilweise als eine Hohlwelle ausgebildet sein und die Ausgleichseinheit innerhalb der Arbeitswelle angeordnet sein. Hierdurch lässt sich eine besonders kompakte Anordnung des Arbeitskopfes, insbesondere in einer zu der Rotationsachse der Arbeitswelle im Wesentlichen parallelen Richtung, erzielen, da trotz der zusätzlichen Ausgleichseinheit gegenüber bekannten Arbeitsköpfen vorzugsweise kaum oder kein zusätzlicher Bauraum in der zu der Rotationsachse der Arbeitswelle im Wesentlichen parallelen Richtung benötigt wird.

Grundsätzlich kann die Ausgleichseinheit beliebig ausgestaltet sein, solange die gewünschte Ausgleichwirkung erzielt werden kann. Bevorzugt ist die Ausgleichseinheit jedoch aus einem elastischen Material, beispielsweise Kautschuk, hergestellt. Als Folge hiervon kann die Ausgleichswirkung vorzugsweise allein durch die elastischen Eigenschaften des Materials der Ausgleichseinheit erzielt werden. Ferner kann die Ausgleichseinheit auch mehrteilig ausgebildet sein und beispielsweise elastische und nicht-elastische Bestandteile umfassen.

Gemäß einer bevorzugten Weiterbildung des letztgenannten Ausführungsbeispiels kann die Ausgleichseinheit als eine Ausgleichsscheibe ausgebildet sein, welche eine erste der Arbeitswelle zugewandte Fläche und eine zweite dem wenigstens einen Lager zugewandte Fläche aufweisen kann. Hierdurch kann die Ausgleichsscheibe in einfacher Weise zwischen dem wenigstens einen Lager und der Arbeitswelle montiert und im Bedarfsfall auch wieder demontiert werden. Die Ausgleichsscheibe kann beispielsweise als eine Gelenkscheibenkupplung ausgebildet sein oder ein Bestandteil davon sein.

Sofern die Ausgleichseinheit als Ausgleichsscheibe ausgebildet ist, kann die Ausgleichsscheibe vorzugsweise eine Mehrzahl in Umfangsrichtung verteilt angeordneter Durchgangsbohrungen umfassen, wobei eine erste Anzahl der Mehrzahl von Durchgangsbohrungen dazu ausgebildet und bestimmt sein kann, die Ausgleichsscheibe betriebsmäßig mit der Arbeitswelle zu verbinden, und eine zweite Anzahl der Mehrzahl von Durchgangsbohrungen dazu ausgebildet und bestimmt sein kann, die Ausgleichsscheibe betriebsmäßig mit dem wenigstens einen Lager zu verbinden. Vorzugsweise sind die Durchgangsbohrungen zur Verbindung der Ausgleichsscheibe mit der Arbeitswelle und die Durchgangsbohrungen zur Verbindung der Ausgleichsscheibe mit dem Lager in Umfangsrichtung einander abwechselnd ausgebildet, um eine im Wesentlichen symmetrische und/oder gleichmäßig verteilte Anordnung der Durchgangsbohrungen an der Ausgleichsscheibe zu erreichen.

Vorzugsweise kann hierbei in jede der Mehrzahl von Durchgangsbohrungen ein Befestigungsmittel, insbesondere eine Schraube oder ein Bolzen, einsetzbar sein, um die betriebsmäßige Verbindung schnell und betriebssicher herstellen zu können.

Gemäß einem weiteren Ausführungsbeispiel kann die Arbeitswelle ferner eine Aufnahmeeinheit, insbesondere eine Aufnahmeplatte, umfassen, welche drehfest mit der Arbeitswelle verbunden, insbesondere verschweißt, sein kann, wobei die Aufnahmeeinheit dazu eingerichtet sein kann, mit der Ausgleichseinheit verbunden zu sein. Sofern die Arbeitswelle wenigstens teilweise als Hohlwelle ausgebildet ist, kann die Aufnahmeeinheit ebenfalls innerhalb der Arbeitswelle angeordnet sein. Ferner kann die Aufnahmeeinheit eine Mehrzahl von Bohrungen, insbesondere Durchgangsbohrungen umfassen, welche dazu ausgebildet und bestimmt sein können, ein Verbinden, insbesondere Verschrauben, der Ausgleichseinheit mit der Aufnahmeeinheit zu erlauben.

Gemäß einer Weiterbildung kann die Aufnahmeeinheit eine Mehrzahl von Aussparungen aufweisen, wobei jede der Mehrzahl von Aussparungen dazu eingerichtet sein kann, ein Ende, insbesondere ein Kopfende, eines oder des Befestigungsmittels aufzunehmen, welches dazu ausgebildet und bestimmt ist, die Ausgleichseinheit betriebsmäßig mit dem wenigstens einen Lager zu verbinden. Sofern das Befestigungsmittel als eine Schraube ausgebildet ist, kann hierdurch ein Kopfende der Schraube im montierten Zustand des Arbeitskopfes in einer jeweiligen Aussparung aufgenommen sein, was ein beidseitiges Verbinden, insbesondere Verschrauben, der Ausgleichseinheit mit der Arbeitswelle, insbesondere der Aufnahmeeinheit, einerseits und mit dem Lager andererseits ermöglichen kann. Ferner kann hierdurch weiterhin eine in der zu der Rotationsachse der Arbeitswelle im Wesentlichen parallelen Richtung kompakte Ausgestaltung des Arbeitskopfes sicherstellt werden.

Gemäß einem weiteren Ausführungsbeispiel kann das wenigstens eine Lager eine Lageraufnahmeeinheit, insbesondere einen Lagerzapfen, umfassen, welche/welcher einen ersten Abschnitt aufweisen kann, welcher dazu eingerichtet ist, das Lager, insbesondere einen Lagerinnenring des Lagers, aufzunehmen, und einen zweiten Abschnitt aufweisen kann, welcher dazu eingerichtet ist, betriebsmäßig mit der Ausgleichseinheit verbunden, insbesondere verschraubt, zu sein. Die Lageraufnahmeeinheit, insbesondere der Lagerzapfen, ermöglicht somit eine betriebssichere Verbindung zwischen dem Lager und der Ausgleichseinheit. Das Lager, insbesondere der Lagerinnenring, kann dabei mit seinem Innenumfang auf einem Außenumfang des ersten Abschnitts der Lageraufnahmeeinheit angeordnet sein. Ferner kann das Lager, insbesondere der Lagerinnenring, mit dem ersten Abschnitt der Lageraufnahmeeinheit, insbesondere durch eine Mutter, wie etwa eine Nutmutter, verschraubt sein.

Zusätzlich oder alternativ kann das Gehäuse wenigstens eine seitliche Öffnung aufweisen, durch welche wenigstens das Lager und/oder die Ausgleichseinheit einsetzbar sein kann/können, wobei die wenigstens eine seitliche Öffnung durch eine Deckeleinheit verschließbar sein kann, welche vorzugsweise mit dem Gehäuse verbindbar, insbesondere verschraubbar, sein kann. Durch das Vorsehen der wenigstens einen seitlichen Öffnung können das Lager und/oder die Ausgleichseinheit sowie weitere Komponenten zur Montage in das Gehäuse eingesetzt und/oder zur Demontage aus dem Gehäuse entnommen werden. Vorzugsweise kann das Gehäuse wenigstens zwei entgegengesetzt angeordnete seitliche Öffnungen aufweisen, welche jeweils wie vorstehend beschrieben ausgebildet sein können.

Gemäß einer Weiterbildung des letztgenannten Ausführungsbeispiels kann die Deckeleinheit dazu eingerichtet sein, mit dem Lager, insbesondere einem Lageraußenring des Lagers, verbunden, insbesondere verschraubt, zu sein. Folglich kann das Lager, insbesondere der Lageraußenring, über die Deckeleinheit an dem Gehäuse festgelegt sein, was eine Montage des Arbeitskopfes weiter erleichtern kann. Der Lageraußenring des Lagers kann somit fest mit dem Gehäuse verbunden sein, während ein oder der Lagerrinnenring des Lagers derart eingerichtet sein kann, dass er zusammen mit der Arbeitswelle um die Rotationsachse rotiert.

Um das Lager vor sonstigen äußeren Einwirkungen zu schützen, kann die Arbeitswelle ferner wenigstens einen vorstehenden Abschnitt umfassen, welcher an einem Ende der Arbeitswelle in einer zu der Rotationsachse radialen Richtung von der Arbeitswelle vorsteht, wobei der vorstehende Abschnitt vorzugsweise dazu eingerichtet sein kann, das Lager zumindest teilweise vor Verschmutzung und/oder eintretenden Fremdkörpern zu schützen. Weiter vorzugsweise kann ein Abdeckelement, insbesondere ein Abdeckblech, mit dem vorstehenden Abschnitt der Arbeitswelle, verbunden, insbesondere verschraubt, sein, um das Lager noch besser schützen zu können. Der vorstehende Abschnitt und/oder das Abdeckelement kann/können dabei nach dem Prinzip einer Labyrinth-Dichtung wirken.

Gemäß einen weiteren Gesichtspunkt der Erfindung wird die obige Aufgabe durch ein Arbeitsgerät, insbesondere ein Ausleger-Arbeitsgerät, gelöst, welches den vorstehend beschriebenen erfindungsgemäßen Arbeitskopf umfasst. Das Arbeitsgerät kann dabei vorzugsweise dazu ausgebildet und bestimmt sein, an einem Fahrzeug, beispielsweise einem Unimog oder dergleichen, angeordnet zu werden. Hinsichtlich der Vorteile und Wirkungen des erfindungsgemäßen Arbeitsgeräts wird auf die vorstehende Diskussion des erfindungsgemäßen Arbeitskopfes verwiesen, wobei sämtliche hinsichtlich des Arbeitskopfes genannten Merkmale, Vorteile und Wirkungen auch auf das Arbeitsgerät zutreffen und umgekehrt.

Gemäß einem Ausführungsbeispiel kann das Arbeitsgerät einen Auslegerarm umfassen, welcher einenends mit dem Arbeitskopf bewegbar verbunden sein kann. Vorzugsweise kann der Auslegerarm ferner dazu ausgebildet und bestimmt sein, andernends mit dem Fahrzeug, insbesondere einem an dem Fahrzeug angebrachten Aufnahmeadapter, verbunden zu werden. Ferner kann der Auslegerarm bevorzugt mehrere jeweils gelenkig miteinander verbundene Armteile umfassen, von welchen vorzugsweise wenigstens ein Armteil teleskopierbar ausgebildet sein kann.

Nachstehend wird ein Ausführungsbeispiel der vorliegenden Erfindung anhand der beigefügten Figuren beschrieben werden. Es stellen dar:
- Fig. 1: eine perspektivische Ansicht eines erfindungsgemäßen Arbeitsgeräts, welches einen erfindungsgemäßen Arbeitskopf umfasst, gemäß einem Ausführungsbeispiel,
- Fig. 2: eine perspektivische Ansicht des Arbeitskopfes gemäß Fig. 1,
- Fig. 3a: eine perspektivische Schnittansicht des Arbeitskopfes gemäß Fig. 2,
- Fig. 3b: eine vergrößerte Detailansicht der Schnittansicht gemäß Fig. 3a und
- Fig. 4: eine Teilexplosionsansicht von Komponenten des Arbeitskopfes.

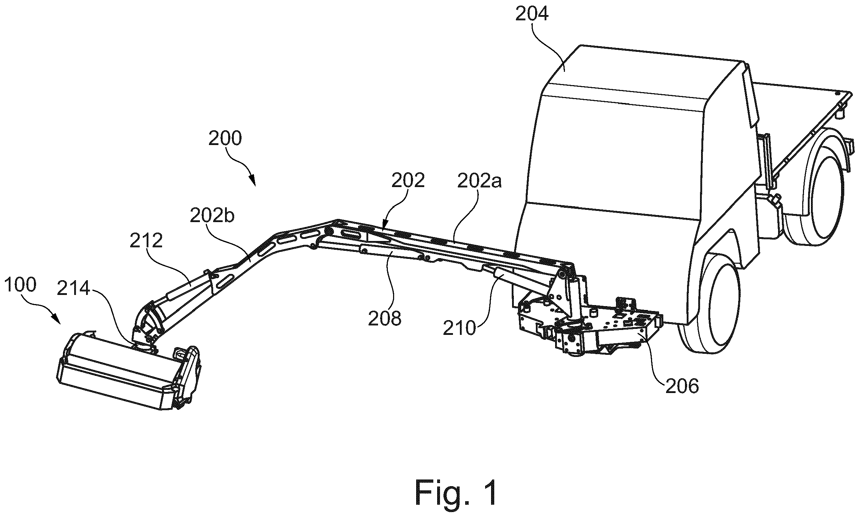

In Fig. 1 ist ein erfindungsgemäßes Arbeitsgerät allgemein durch das Bezugszeichen 200 gekennzeichnet. Das Arbeitsgerät 200 ist dabei in dem dargestellten Ausführungsbeispiel als ein Ausleger-Arbeitsgerät ausgebildet. Das Arbeitsgerät 200 umfasst einen Auslegerarm 202, welcher bewegbar mit einem Fahrzeug 204, beispielsweise vom Typ Unimog, verbunden ist. Der Auslegerarm 202 ist dabei in dem dargestellten Ausführungsbeispiel über einen an dem Fahrzeug 204 angebrachten Aufnahmeadapter 206 mit dem Fahrzeug 204 drehbar verbunden. Der Auslegerarm 202 wiederum umfasst mehrere Armteile 202a und 202b, welche mittels wenigstens eines Hydraulikzylinders 208 relativ zueinander verschwenkbar sind. Ferner ist der Armteil 202a des Auslegerarms 200 durch einen weiteren Hydraulikzylinder 210 um eine im Wesentlichen horizontale Achse relativ zu dem Aufnahmeadapter 206 schwenkbar.

An einem dem Fahrzeug 204, insbesondere dem Aufnahmeadapter 206, abgewandten Ende des Auslegerarms 202 ist ein Ausführungsbeispiel eines erfindungsgemäßen Arbeitskopfes 100 bewegbar angebracht. Der Arbeitskopf 100 ist dabei mittels noch eines weiteren Hydraulikzylinders 212 ebenfalls um eine im Wesentlichen horizontale Achse schwenkbar und, insbesondere mittels eines Z-Gelenks, um eine im Wesentlichen vertikale Achse drehbar an dem Armteil 202b des Auslegerarms 202 angeordnet. Die Anbindung des Arbeitskopfes 100 an den Armteil 202b ist in dem dargestellten Ausführungsbeispiel durch eine Schnellwechselvorrichtung 214 ausgebildet. Ferner ist die Schnellwechselvorrichtung 214 vorzugsweise drehbar, wodurch eine Winkelausrichtung des Arbeitskopfes hin zum Fahrzeug 204 einstellbar sein kann.

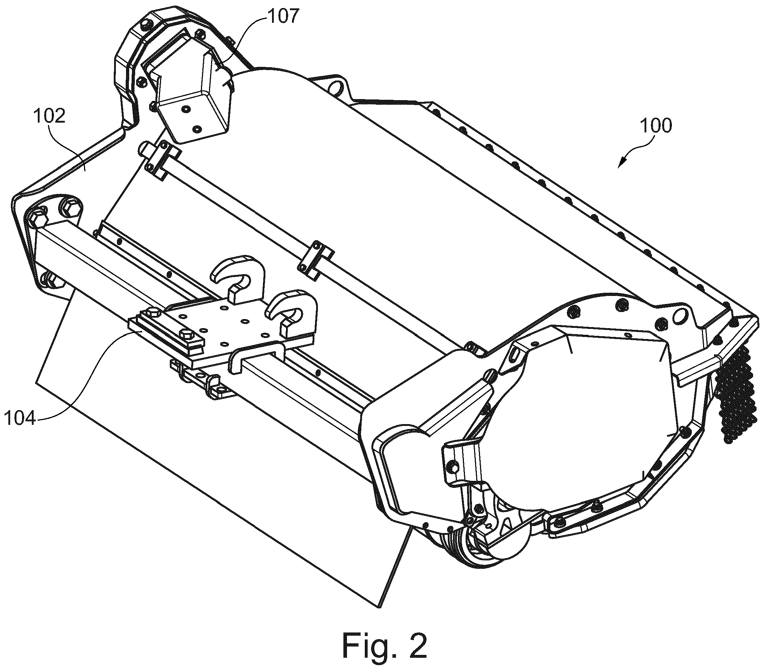

Die Fig. 2 zeigt eine perspektivische Ansicht des Arbeitskopfes 100 gemäß Fig. 1. Der Arbeitskopf 100 kann beispielsweise als ein Mähkopf, insbesondere ein Schlegelmähkopf, zur Durchführung von Mäharbeiten oder dergleichen ausgebildet sein. An einem Gehäuse 102 des Arbeitskopfes 100 kann eine Halterung 104 ausgebildet sein, welche in dem dargestellten Ausführungsbeispiel als eine Halterungsplatte ausgebildet ist und dazu vorgesehen ist, den Arbeitskopf 100 mit dem Auslegerarm 202, insbesondere der Schnellwechselvorrichtung 214, vorzugsweise lösbar, zu verbinden.

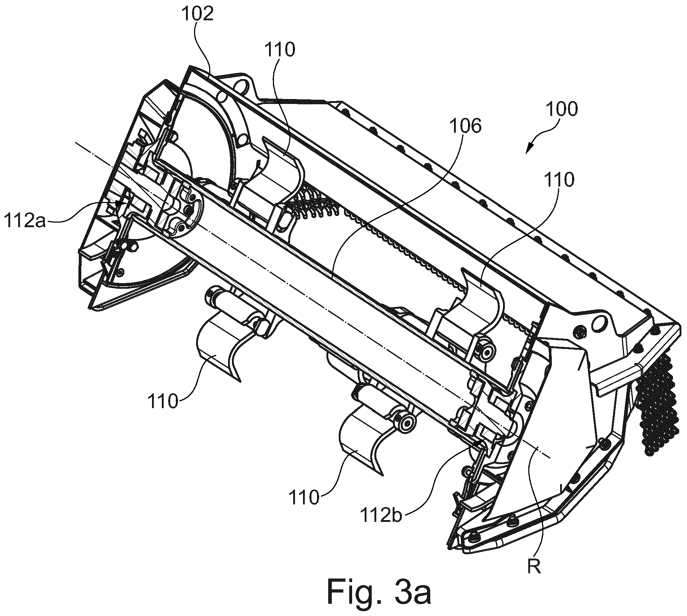

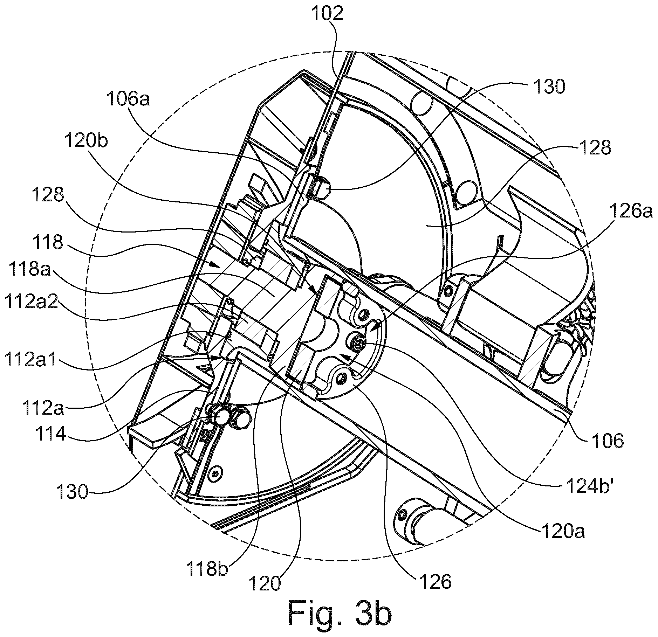

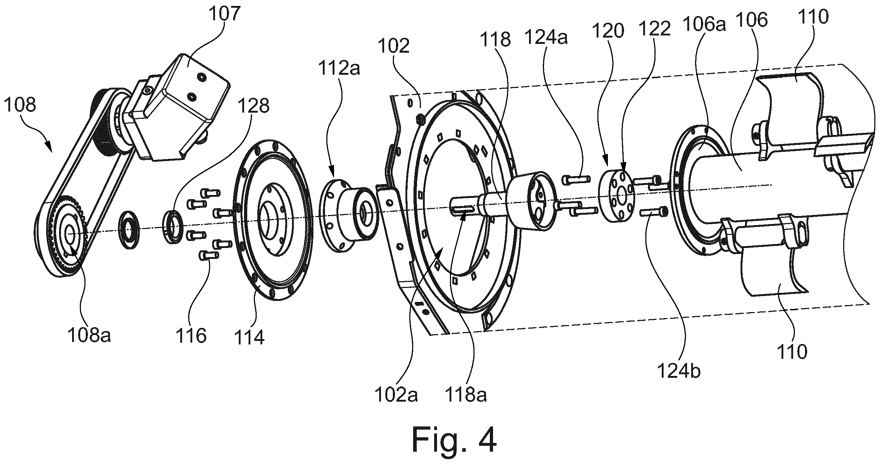

Weitere Merkmale des Arbeitskopfes 100 sowie Details zu seiner Funktionsweise werden im Folgenden insbesondere unter Bezugnahme auf die Fig. 3a, 3b und 4 beschrieben werden.

Wie in Fig. 3a erkennbar, umfasst der Arbeitskopf 100 eine Arbeitswelle 106, welche in dem dargestellten Ausführungsbeispiel als eine Hohlwelle ausgebildet ist. Die Arbeitswelle 106 ist um eine Rotationsachse R rotierend antreibbar, welche in Fig. 3a lediglich schematisch durch eine gestrichelte Linie angedeutet ist. Ein Antreiben der Arbeitswelle 106 kann dabei über eine Antriebseinheit 107 erfolgen, welche beispielsweise in den Fig. 2 und 4 erkennbar ist. Die Antriebseinheit 107 kann dabei beispielsweise als eine elektrische oder eine hydraulische oder eine elektrohydraulische Antriebseinheit ausgebildet sein. Ferner kann die Antriebseinheit 107 über einen Riemenantrieb 108 (siehe beispielsweise Fig. 4) mit der Arbeitswelle 106 verbunden sein, um die Arbeitswelle 106 um die Rotationsachse R antreiben zu können.

Wie ferner in Fig. 3a erkennbar, umfasst die Arbeitswelle 106 in dem dargestellten Ausführungsbeispiel mehrere Arbeitseinheiten 110, welche im dargestellten Ausführungsbeispiel als Schlagmittel ausgebildet sind und dazu eingerichtet sind, zusammen mit der Arbeitswelle 106 um die Rotationsachse R zu rotieren. Die Arbeitswelle 106 ist dabei um die Rotationsachse R drehbar in dem Gehäuse 102 aufgenommen. In dem dargestellten Ausführungsbeispiel ist die Arbeitswelle 106 ferner an jedem Ende davon über ein um die Rotationsachse R drehbares Lager 112a bzw. 112b in dem Gehäuse 102 gelagert. Das Lager 112a ist dabei auch in der vergrößerten Detailansicht gemäß Fig. 3b erkennbar. Das Lager 112a umfasst dabei einen Lageraußenring 112a1, welcher drehfest mit einer Deckeleinheit 114 verbunden sein kann. Die Deckeleinheit 114 kann wiederum über Befestigungsmittel 116, beispielsweise in Form einer oder mehrere Schrauben, drehfest mit dem Gehäuse 102 verbunden sein. Bereits an dieser Stelle sei darauf hingewiesen, dass das weitere Lager 112b und/oder eine weitere Deckeleinheit und/oder weitere Komponenten des Arbeitskopfes 100 auf der der Deckeleinheit 114 entgegengesetzten Seite des Gehäuses 102 analog zu dem Lager 112a und/oder der Deckeleinheit 114 und/oder analog zur Detailansicht gemäß Figur 3b ausgebildet sein kann/können.

Das Lager 112a umfasst ferner einen Lagerinnenring 112a2, welcher, beispielsweise über an sich bekannte Wälzkörper (nicht dargestellt), wie Kugeln, Zylinder oder Kegel oder dergleichen, relativ zu dem Lageraußenring 112a1 drehbar ist. Der Lagerinnenring 112a2 ist dabei drehfest mit einer Lageraufnahmeeinheit 118 verbunden, welche in dem dargestellten Ausführungsbeispiel als ein Lagerzapfen ausgebildet ist. Der Lagerzapfen 118 kann beispielsweise eine Welle-Nabe-Verbindung in Form einer Passfeder 118a aufweisen (s. beispielsweise Fig. 4), mittels welcher der Lagerzapfen 118 mit einer entsprechenden Nut 108a an dem Riemenantrieb 108 in Drehmomentübertragungsverbindung mit der Antriebseinheit 107 bringbar ist.

Ein erster Abschnitt 118a des Lagerzapfens 118 ist dementsprechend dazu eingerichtet, das Lager 112a, insbesondere den Lagerinnenring 112a2 aufzunehmen, während ein zweiter Abschnitt 118b des Lagerzapfens 118 dazu eingerichtet sein kann, betriebsmäßig mit einer Ausgleichseinheit 120 verbunden zu sein. Die Ausgleichseinheit 120 ist dabei gemäß dem dargestellten Ausführungsbeispiel als eine Ausgleichsscheibe ausgebildet. Ferner ist die Ausgleichseinheit 120 erfindungsgemäß zwischen dem Lager 112a und der Arbeitswelle 106 angeordnet, so dass gemäß dem Ausführungsbeispiel ein Kraftfluss ausgehend von dem ersten Abschnitt 118a des Lagerzapfens 118 in den zweiten Abschnitt 118b und dann über die Ausgleichseinheit 120 in die Arbeitswelle 106 geleitet wird. Die Ausgleichseinheit 120 kann dabei aus einem elastischen Material, wie beispielsweise Kautschuk, hergestellt sein, um Schwingungen und/oder Lastspitzen und/oder Drehungleichförmigkeiten und/oder Fertigungstoleranzen auszugleichen. Das Lager 112a sowie das weitere Lager 112b können daher konstruktiv einfach ausgestaltet sein und müssen keinen über die Drehbarkeit um die Rotationsachse R hinausgehenden Freiheitsgrad aufweisen.

Wie ferner in den Fig. 3a und 3b erkennbar, ist die Ausgleichseinheit 120 in dem dargestellten Ausführungsbeispiel innerhalb der als Hohlwelle ausgebildeten Arbeitswelle 106 angeordnet. Ferner weist die Ausgleichseinheit 120 eine erste der Arbeitswelle 106 zugewandte Fläche 120a und eine zweite dem Lager 112a, insbesondere dem Lagerzapfen 118, zugewandte Fläche der 120b auf. Um die Ausgleichseinheit 120 in Form der Ausgleichsscheibe mit der Arbeitswelle 106 einerseits und dem Lager 112a, insbesondere dem Lagerzapfen 118, andererseits verbinden zu können, umfasst die Ausgleichsscheibe 120 gemäß dem dargestellten Ausführungsbeispiel ferner eine Mehrzahl in Umfangsrichtung verteilt angeordneter Durchgangsbohrungen 122 (siehe beispielsweise Fig. 4). Dabei ist gemäß dem dargestellten Ausführungsbeispiel eine erste Anzahl der Mehrzahl von Durchgangsbohrungen 122 dazu ausgebildet und bestimmt, die Ausgleichsscheibe 120 betriebsmäßig mit der Arbeitswelle 106 zu verbinden, und eine zweite Anzahl der Mehrzahl von Durchgangsbohrungen 122 dazu ausgebildet und bestimmt, die Ausgleichsscheibe 120 betriebsmäßig mit dem Lager 112a zu verbinden. In jeder der Mehrzahl von Durchgangsbohrungen 122 kann dabei ein Befestigungsmittel, beispielsweise in Form von jeweils einer Schraube 124a, 124b einsetzbar sein. Jede Schraube 124a kann dabei dazu vorgesehen sein, die Ausgleichsscheibe 120 mit der Arbeitswelle 106 zu verbinden, während jede Schraube 124b dazu vorgesehen sein kann, die Ausgleichsscheibe 120 mit dem Lagerzapfen 118, d.h. dem Lager 112a, zu verbinden.

Um die Ausgleichsscheibe 120 mit der Arbeitswelle 106 zu verbinden, kann die Arbeitswelle 106 ferner eine Aufnahmeeinheit 126 (s. beispielsweise Fig. 3b) umfassen, welche in dem dargestellten Ausführungsbeispiel als eine Aufnahmeplatte ausgebildet ist. Die Aufnahmeeinheit 126 kann dabei mit der Arbeitswelle 106 drehfest verbunden, insbesondere verschweißt, sein.

Die Aufnahmeeinheit 126 kann bevorzugt eine Mehrzahl von Aussparungen 126a aufweisen, wobei jede der Mehrzahl von Aussparungen 126a dazu eingerichtet sein kann, ein Ende 124b', insbesondere ein Kopfende, eines Befestigungsmittels in Form der Schraube 124b aufzunehmen.

Nachzutragen ist noch, dass die Deckeleinheit 114 dazu eingerichtet sein kann, wenigstens eine seitliche Öffnung 102a des Gehäuses 102 zu verschließen, durch welche das Lager 112a und/oder die Ausgleichseinheit 120 und/oder der Lagerzapfen 118 einsetzbar und optional herausnehmbar sind.

Hinsichtlich des Lagers 112a ist noch nachzutragen, dass der Lagerinnenring 112a2 über eine Mutter 128, insbesondere eine Nutmutter, mit dem Lagerzapfen 118 verschraubt sein kann. Die Deckeleinheit 114 kann hingegen dazu eingerichtet sein, mit dem Lageraußenring 112a1 des Lagers 112a verschraubt zu sein, wie beispielsweise in Fig. 4 durch zueinander korrespondierend ausgebildete Bohrungen an dem Lager 112a einerseits und der Deckeleinheit 114 andererseits erkennbar.

Um das Lager 112a schließlich vor Verschmutzungen schützen zu können, kann die Arbeitswelle 106 ferner einen vorstehenden Abschnitt 106a umfassen, welcher in einer zu der Rotationsachse R radialen Richtung von der Arbeitswelle 106 vorstehen kann. In dem dargestellten Ausführungsbeispiel ist mit dem vorstehenden Abschnitt 106a ferner ein Abdeckelement 128, beispielsweise in Form eines Abdeckblechs oder dergleichen, über eine oder mehrere Schrauben 130 verschraubt, um die schützende Wirkung des vorstehenden Abschnitts 106a für das Lager 112a weiter zu verstärken.

## Patentansprüche

1. Arbeitskopf (100), insbesondere Mähkopf, welcher dazu ausgebildet und bestimmt ist, bei einem Arbeitsgerät (200) eingesetzt zu werden, wobei der Arbeitskopf (100) umfasst:
eine Arbeitswelle (106), welche um eine Rotationsachse (R) rotierend antreibbar ist, wobei die Arbeitswelle (106) mit wenigstens einer Arbeitseinheit (110) ausgestattet ist, welche dazu eingerichtet ist, zusammen mit der Arbeitswelle (106) um die Rotationsachse (R) zu rotieren,
ein Gehäuse (102), welches dazu eingerichtet ist, die Arbeitswelle (102) drehbar darin aufzunehmen,
wobei die Arbeitswelle (106) an wenigstens einem der beiden Enden davon über wenigstens ein um die Rotationsachse (R) drehbares Lager (112a, 112b) in dem Gehäuse (102) gelagert ist,
**dadurch gekennzeichnet, dass**
zwischen dem wenigstens einen Lager (112a, 112b) und der Arbeitswelle (106) eine Ausgleichseinheit (120) angeordnet ist.

2. Arbeitskopf nach Anspruch 1,
**dadurch gekennzeichnet, dass** das wenigstens eine Lager (112a, 112b) lediglich um die Rotationsachse (R) drehbar ist und darüber hinaus keinen weiteren, insbesondere rotatorischen und/oder translatorischen, Freiheitsgrad aufweist.

3. Arbeitskopf nach Anspruch 1 oder 2,
**dadurch gekennzeichnet, dass** die Arbeitswelle (106) wenigstens teilweise als eine Hohlwelle ausgebildet ist und die Ausgleichseinheit (120) innerhalb der Arbeitswelle (106) angeordnet ist.

4. Arbeitskopf nach einem der vorhergehenden Ansprüche,
**dadurch gekennzeichnet, dass** die Ausgleichseinheit (120) aus einem elastischen Material, beispielsweise Kautschuk, hergestellt ist.

5. Arbeitskopf nach einem der vorhergehenden Ansprüche,
**dadurch gekennzeichnet, dass** die Ausgleichseinheit (120) als eine Ausgleichsscheibe ausgebildet ist, welche eine erste der Arbeitswelle (106) zugewandte Fläche (120a) und eine zweite dem wenigstens einen Lager (112a, 112b) zugewandte Fläche (120b) aufweist.

6. Arbeitskopf nach Anspruch 5,
**dadurch gekennzeichnet, dass** die Ausgleichsscheibe (120) eine Mehrzahl in Umfangsrichtung verteilt angeordneter Durchgangsbohrungen (122) umfasst, wobei eine erste Anzahl der Mehrzahl von Durchgangsbohrungen (122) dazu ausgebildet und bestimmt ist, die Ausgleichsscheibe (120) betriebsmäßig mit der Arbeitswelle (106) zu verbinden, und eine zweite Anzahl der Mehrzahl von Durchgangsbohrungen (122) dazu ausgebildet und bestimmt ist, die Ausgleichsscheibe (120) betriebsmäßig mit dem wenigstens einen Lager (112a, 112b) zu verbinden.

7. Arbeitskopf nach Anspruch 6,
**dadurch gekennzeichnet, dass** in jede der Mehrzahl von Durchgangsbohrungen (122) ein Befestigungsmittel (124a, 124b), insbesondere eine Schraube oder ein Bolzen, einsetzbar ist.

8. Arbeitskopf nach einem der vorhergehenden Ansprüche,
**dadurch gekennzeichnet, dass** die Arbeitswelle (106) ferner eine Aufnahmeeinheit (126), insbesondere eine Aufnahmeplatte, umfasst, welche drehfest mit der Arbeitswelle (106) verbunden, insbesondere verschweißt, ist, wobei die Aufnahmeeinheit (126) dazu eingerichtet ist, mit der Ausgleichseinheit (120) verbunden zu sein.

9. Arbeitskopf nach Anspruch 8,
**dadurch gekennzeichnet, dass** die Aufnahmeeinheit (126) eine Mehrzahl von Aussparungen (126a) aufweist, wobei jede der Mehrzahl von Aussparungen (126a) dazu eingerichtet ist, ein Ende (124b'), insbesondere ein Kopfende, eines oder des Befestigungsmittels (124b) aufzunehmen, welches dazu ausgebildet und bestimmt ist, die Ausgleichseinheit (120) betriebsmäßig mit dem wenigstens einen Lager (112a, 112b) zu verbinden.

10. Arbeitskopf nach einem der vorhergehenden Ansprüche,
**dadurch gekennzeichnet, dass** das wenigstens eine Lager (112a, 112b) eine Lageraufnahmeeinheit (118), insbesondere einen Lagerzapfen, umfasst, welche/welcher einen ersten Abschnitt (118a) aufweist, welcher dazu eingerichtet ist, das Lager (112a, 112b), insbesondere einen Lagerinnenring (112a2) des Lagers (112a), aufzunehmen, und einen zweiten Abschnitt (118b) aufweist, welcher dazu eingerichtet ist, betriebsmäßig mit der Ausgleichseinheit (120) verbunden, insbesondere verschraubt, zu sein.

11. Arbeitskopf nach einem der vorhergehenden Ansprüche,
**dadurch gekennzeichnet, dass** das Gehäuse (102) wenigstens eine seitliche Öffnung (102a) aufweist, durch welche wenigstens das Lager (112a, 112b) und/oder die Ausgleichseinheit (120) einsetzbar ist/sind, wobei die wenigstens eine seitliche Öffnung (102a) durch eine Deckeleinheit (114) verschließbar ist, welche vorzugsweise mit dem Gehäuse (102) verbindbar, insbesondere verschraubbar, ist.

12. Arbeitskopf nach Anspruch 11,
**dadurch gekennzeichnet, dass** die Deckeleinheit (114) dazu eingerichtet ist, mit dem Lager (112a, 112b), insbesondere einem Lageraußenring (112a1) des Lagers (112a), verbunden, insbesondere verschraubt, zu sein.

13. Arbeitskopf nach einem der vorhergehenden Ansprüche,
**dadurch gekennzeichnet, dass** die Arbeitswelle (106) ferner wenigstens einen vorstehenden Abschnitt (106a) umfasst, welcher an einem Ende der Arbeitswelle (106) in einer zu der Rotationsachse (R) radialen Richtung von der Arbeitswelle (106) vorsteht, wobei der vorstehende Abschnitt (106a) vorzugsweise dazu eingerichtet ist, das Lager (112a, 112b) zumindest teilweise vor Verschmutzung und/oder eintretenden Fremdkörpern zu schützen,
wobei weiter vorzugsweise ein Abdeckelement (128), insbesondere ein Abdeckblech, mit dem vorstehenden Abschnitt (106a) der Arbeitswelle (106), verbunden, insbesondere verschraubt, ist.

14. Arbeitsgerät (200), insbesondere Ausleger-Arbeitsgerät, umfassend den Arbeitskopf (100) nach einem der vorhergehenden Ansprüche, wobei das Arbeitsgerät (200) vorzugsweise dazu ausgebildet und bestimmt ist, an einem Fahrzeug (204) angeordnet zu werden.

15. Arbeitsgerät nach Anspruch 14,
**dadurch gekennzeichnet, dass** das Arbeitsgerät (200) einen Auslegerarm (202) umfasst, welcher einenends mit dem Arbeitskopf (100) bewegbar verbunden ist, und vorzugsweise dazu ausgebildet und bestimmt ist, andernends mit dem Fahrzeug (204), insbesondere einem an dem Fahrzeug (204) angebrachten Aufnahmeadapter (206), verbunden zu werden.
